# EUROPÄISCHE PATENTANMELDUNG

(11) **EP 1 447 169 A1**
(43) Veröffentlichungstag der Anmeldung: **18.08.2004**
(21) Anmeldenummer: 04002255.0
(22) Anmeldetag: 02.02.2004
(51) Int. Cl.: B23Q 11/08

(54) **Werkzeugmaschine**

(30) Priorität: 06.02.2003 DE 10304842
(71) Anmelder: Hennig Holding GmbH, 85551 Kirchheim (DE)
(72) Erfinder: Schönerwald, Kurt, 84186 Vilsheim (DE)
(74) Vertreter: Zinnecker, Armin, Dipl.-Ing.

(57) **Zusammenfassung**

Eine Werkzeugmaschine umfaßt ein Maschinenbett (1) und einen verfahrbaren Ständer (3), an dem beiderseits jeweils eine Abdeckung (10, 11) angebracht ist.

Um eine derartige Werkzeugmaschine zu vereinfachen ist an jeder Abdeckung (10, 11) jeweils ein Zugelement (17, 20) befestigt, dessen anderes Ende jeweils auf der Seite dieser Abdeckung (10, 11 ) mit dem Ständer (3) verbunden (18, 21 ) ist (Fig. 1).

## Beschreibung

Die Erfindung betrifft eine Werkzeugmaschine mit einem Maschinenbett und einem verfahrbaren Ständer, an dem beiderseits jeweils eine Abdeckung angebracht ist.

Eine derartige Werkzeugmaschine ist aus der DE 43 19 906 C2 bekannt. Dort ist eine Werkzeugmaschine mit einem feststehenden Werkstücktisch zur Aufnahme eines zu bearbeitenden Werkstückes, einem zumindest in Längsrichtung des Werkstücktisches verfahrbaren Ständer, einem an dem Ständer vorgesehenen Spindelkopf zur Aufnahme eines Werkzeuges und mit beidseits mit dem Ständer verbundenen hinteren Abdeckungen beschrieben. Die Abdeckungen schließen einen vorderen Arbeitsraum nach hinten ab, wobei sich die wirksamen Längen der hinteren Abdeckungen beim Verfahren des Ständers in der Längsrichtung verlängern bzw. entsprechend verkürzen. Der Arbeitsraum ist ferner durch Außenwände zur Seite und nach vorne abgeschlossen. Die hinteren Abdeckungen sind mit dem Ständer in der Längsrichtung mitfahrbar ausgebildet. Um auf konstruktiv einfache Weise eine schmal bauende Werkzeugmaschine mit zuverlässiger Arbeitsraumabdeckung zu schaffen, sind die hinteren Abdeckungen hinter dem Ständer miteinander verbunden. Die Außenwände umfassen zumindest eine Tür. Die Abdeckungen können jeweils einen Vorhang aus Lamellen umfassen. Die Verbindung der hinteren Abdeckungen kann durch ein Zugseil erfolgen.

Aus der EP 1 160 049 ist eine Werkzeugmaschine bekannt, die ein Maschinenbett und einen verfahrbaren Ständer umfaßt, an dem beiderseits zwei Abdeckungen befestigt sind, die einen Arbeitsraum von einem Rückraum trennen, die beim Verfahren des Ständers von ihm mitgenommen werden und die im Rückraum mit jeweils einem Zugteil verbunden sind. Um eine derartige Werkzeugmaschine so auszubilden, daß sie bei einfacher konstruktiver Gestaltung eine einwandfreie Abtrennung des Arbeitsraumes gegenüber dem Rückraum gewährleistet, sind die Zugteile mit ihren anderen Enden an in Verfahrrichtung einander gegenüberliegenden Seiten des Ständers befestigt. Die Zugteile kreuzen einander im Rückraum. Jedes Zugteil ist auf der der jeweiligen Abdeckung gegenüberliegenden Seite mit dem Ständer verbunden, und zwar jeweils in unmittelbarer Nähe der jeweils anderen Abdeckung.

Aufgabe der Erfindung ist es, eine Werkzeugmaschine der eingangs angegebenen Art zu vereinfachen.

Nach einem ersten Vorschlag wird diese Aufgabe dadurch gelöst, daß an jeder Abdeckung jeweils ein Zugelement befestigt ist, dessen anderes Ende jeweils auf der Seite dieser Abdeckung mit dem Ständer verbunden ist. Hierdurch kann die Länge der Zugelemente verkürzt werden, insbesondere gegenüber der aus der EP 1 160 049 A2 bekannten Ausführungsform.

Nach einem zweiten Vorschlag, für den gesondert Schutz beansprucht wird, wird die der Erfindung zugrundeliegende Aufgabe dadurch gelöst, daß an jeder Abdeckung jeweils ein Zugelement befestigt ist, dessen anderes Ende jeweils mit dem Ständer an dessen der Abdeckung jeweils abgewandten Ende verbunden ist. Hierdurch ist es möglich, die Anzahl der erforderlichen Umlenkrollen zu reduzieren, insbesondere gegenüber der aus der EP 1 160 049 A2 bekannten Ausführungsform. Ferner kann die Länge der Zugelemente verkürzt werden.

Die beiden erfindungsgemäßen Lösungen können miteinander kombiniert werden. In diesem Fall ist die Werkzeugmaschine dadurch gekennzeichnet, daß an jeder Abdeckung jeweils ein Zugelement befestigt ist, dessen anderes Ende jeweils auf der Seite dieser Abdeckung mit dem Ständer verbunden ist, und zwar an dessen der Abdeckung jeweils abgewandten Ende.

Vorteilhafte Weiterbildungen sind in den Unteransprüchen beschrieben.

Die Abdeckungen können an der Vorderseite des Ständers bzw. im Bereich der Vorderseite des Ständers angebracht sein. Die Vorderseite des Ständers ist dabei diejenige Seite, die dem Arbeitsraum zugewandt ist.

Eine weitere vorteilhafte Weiterbildung ist dadurch gekennzeichnet, daß die anderen Enden der Zugelemente an der Hinterseite des Ständers bzw. im Bereich der Hinterseite des Ständers angebracht sind. Es ist allerdings auch möglich, daß die anderen Enden der Zugelemente an der Vorderseite des Ständers bzw. im Bereich der Vorderseite des Ständers angebracht sind.

Eine weitere vorteilhafte Weiterbildung ist dadurch gekennzeichnet, daß die den Befestigungsstellen der Zugelemente an dem Ständer nächstliegenden Umlenkrollen hinter dem Ständer angeordnet sind. Die den Befestigungsstellen der Zugelemente an dem Ständer nächstliegenden Umlenkrollen können allerdings auch in der Nähe der Abdeckungen angeordnet sein.

Nach einer weiteren vorteilhaften Weiterbildung sind die den Befestigungsstellen der Zugelemente an dem Ständer nächstliegenden Umlenkrollen mit jeweils einer weiteren Umlenkrolle für das jeweils andere Zugelement bzw. die jeweils andere Abdeckung koaxial. Hierdurch kann die Anzahl der Lagerstellen für die Umlenkrollen reduziert werden.

Ausführungsbeispiele der Erfindung werden nachstehend anhand der beigefügten Zeichnung im einzelnen erläutert. Die Zeichnung zeigt in jeweils einer Ansicht von oben in
- Fig. 1: eine erste Ausführungsform einer Werkzeugmaschine,
- Fig. 2: eine zweite Ausführungsform,
- Fig. 3: eine dritte Ausführungsform und
- Fig. 4: eine vierte Ausführungsform.

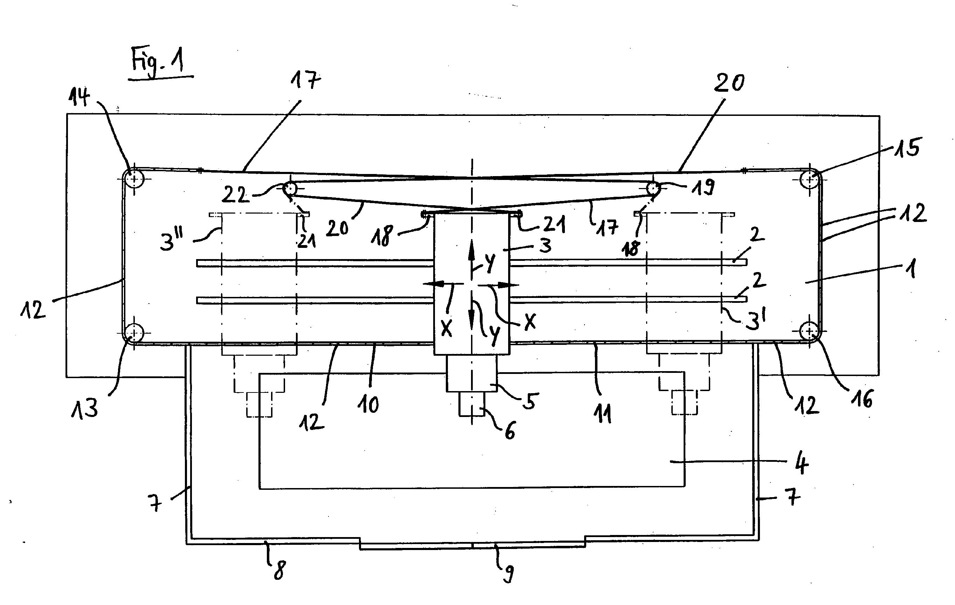

Die in Fig. 1 in einer Ansicht von oben dargestellte Werkzeugmaschine umfaßt ein Maschinenbett 1 mit in X-Richtung verlaufenden Schienen 2, auf denen ein Ständer 3 verfahrbar ist. Am vorderen, dem Arbeitsraum 4 zugewandten Ende des Ständers 3 ragt aus diesem ein Spindelkopf 5 hervor, der an seinem vorderen Ende ein Werkzeug 6 trägt, durch welches ein in dem Arbeitsraum 4 befindliches Werkstück (in der Zeichnung nicht dargestellt) bearbeitet werden kann. Der Spindelkopf 5 ist in Y-Richtung verfahrbar. Er kann ferner auch in Z-Richtung (senkrecht zur Zeichenebene) verfahrbar sein.

Der Arbeitsraum 4 ist durch Seitenwände 7 und eine Vorderwand 8, in der sich eine Tür 9 befindet, abgeschlossen. Die Rückseite des Arbeitsraums 4 wird durch eine linke Abdeckung 10 und eine rechte Abdeckung 11 abgeschlossen. Die Abdeckungen 10, 11 bestehen aus aneinander gereihten, relativ zueinander schwenkbaren, vertikalen Lamellen 12, insbesondere aus Aluminium. Die linke Abdeckung 10 ist an der linken Seite des Ständers 3 befestigt, und zwar in der Nähe des vorderen Endes des Ständers 3. In entsprechender Weise ist die rechte Abdeckung 11 an der rechten Seite des Ständers 3 angebracht, und zwar ebenfalls in der Nähe des vorderen Endes des Ständers 3. Die Abdeckungen 10, 11 fluchten miteinander. Sie werden um vertikale Rollen 13, 14, 15, 16 umgelenkt, die in einem Rechteck angeordnet sind. Die hinteren Rollen 14, 15 liegen hinter dem hinteren Ende des Ständers 3.

Am Ende der linken Abdeckung 10 ist ein linkes Zugelement 17 befestigt, dessen anderes Ende an der Befestigungsstelle 18 auf der linken Seite des Ständers 3 mit diesem verbunden ist. Die Befestigungsstelle 18 befindet sich ferner an dem der linken Abdeckung 10 abgewandten Ende des Ständers 3, also am hinteren Ende des Ständers 3. Das linke Zugelement 17 wird über eine Umlenkrolle 19 geführt. Die Umlenkrolle 19, die die der Befestigungsstelle 18 des linken Zugelements 17 an dem Ständer 3 nächstliegende Umlenkrolle ist, ist hinter dem Ständer 3 angeordnet.

Die äußerst rechte Position des Ständers 3 ist strichpunktiert dargestellt und mit 3' bezeichnet. Die der Befestigungsstelle 18 nächstliegende Umlenkrolle 19 ist derart angeordnet, daß sie auch in der äußerst rechten Stellung 3' des Ständers 3 noch rechts von der Befestigungsstelle 18 liegt.

Die zur rechten Abdeckung 11 gehörenden, entsprechenden Bestandteile sind symetrisch zur linken Abdeckung 10 angeordnet. Dementsprechend ist am Ende der rechten Abdeckung 11 ein rechtes Zugelement 20 befestigt, dessen anderes Ende auf der rechten Seite des Ständers 3 mit diesem verbunden ist, und zwar an der Befestigungsstelle 21, die an dem der rechten Abdeckung 11 abgewandten Ende des Ständers 3 angeordnet ist, also an der Hinterseite des Ständers 3. Das rechte Zugelement 20 wird über eine Umlenkrolle 22 geführt. Diese der Befestigungsstelle 21 nächstliegende Umlenkrolle 22 ist hinter dem Ständer 3 angeordnet. Sie liegt auch in der äußerst linken, strichpunktiert dargestellten und mit 3" bezeichneten Stellung des Ständers 3 noch links von der Befestigungsstelle 21.

Die Zugelemente 17, 20 sind vorteilhaft als Zugseile ausgestaltet. In den Zugelementen 17, 20 können Spannelemente vorgesehen sein (in der Zeichnung nicht dargestellt), insbesondere Federn oder Federelemente, um zu gewährleisten, daß die Zugelemente 17, 20 bei jeder Stellung des Ständers 3 "auf Spannung" sind.

Wenn der Ständer 3 in X-Richtung verfahren wird, nimmt er die Abdeckungen 10, 11 mit. Wenn der Ständer 3 beispielsweise nach links verfahren wird, zieht das linke Zugelement 17 die linke Abdeckung 10 mit. Die rechte Abdeckung 11 wird bei dieser Bewegung von dem Ständer 3 gezogen. Bei einer Bewegung nach rechts ergeben sich umgekehrte Verhältnisse. Die Gesamtlänge der Abdeckungen 10, 11 ist derart gewählt, daß sich auch in den äußersten Positionen 3' und 3" eine vollständige hintere Abdeckung des Arbeitsraumes 4 ergibt.

Da die Zugelemente 17, 20 jeweils auf der Seite der jeweiligen Abdeckung 10, 11 mit dem Ständer 3 verbunden sind, das linke Zugseil 17 also an der Befestigungsstelle 18 mit der linken Seite des Ständers 3 und das rechte Zugelement 20 an der Befestigungsstelle 21 auf der rechten Seite des Ständers 3, können die Zugelemente 17, 20 kürzer ausgebildet sein als bei einer Ausführungsform, bei der das jeweilige Zugelement 17, 20 mit derjenigen Seite des Ständers 3 verbunden ist, die der jeweiligen Abdeckung gegenüberliegt.

In dem letztgenannten Fall müßten die dem Ständer 3 nächstliegenden Umlenkrollen 19, 22 weiter nach außen gerückt werden, so daß sich die Längen der Zugelemente 17, 20 um die entsprechenden doppelten Abstände verlängern würden.

Die linke Abdeckung 10 und das anschließende linke Zugelement 17 werden um drei Umlenkrollen 13, 14, 19 geführt. In entsprechender Weise werden die rechte Abdeckung 11 und das rechte Zugelement 20 um drei Umlenkrollen 16, 15, 22 geführt. Für jede Seite werden lediglich drei Umlenkrollen benötigt, da die Zugelemente 17, 20 mit dem Ständer 3 jeweils an dessen den Abdeckungen 10, 11 abgewandten Ende verbunden sind, nämlich mit den Befestigungsstellen 18, 21, die an der Hinterseite des Ständers 3 liegen. Auch hierdurch können die Zugelemente 17, 20 kürzer sein.

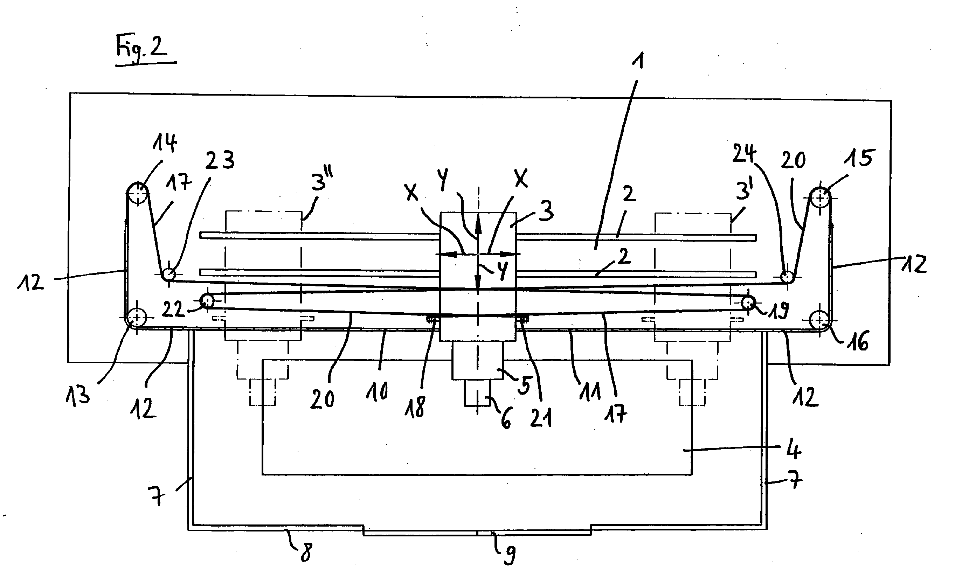

Bei der in Fig. 2 gezeigten Ausführungsform sind zwischen den zweiten Umlenkrollen 14, 15 und den dem Ständer 3 nächstliegenden Umlenkrollen 19, 22 weitere Umlenkrollen 23, 24 vorgesehen, die auf einer Höhe im Bereich des Ständers 3, also zwischen dem vorderen und hinteren Ende des Ständers 3, liegen. Hierdurch wird die Führung der Zugelemente 17, 20 aus dem Bereich hinter dem Ständer 3 herausverlegt, so daß dieser Bereich besser zugänglich ist. Gleichwohl kann auch bei dieser Ausführungsform der Vorteil einer Verkürzung der Zugelemente 17, 20 erreicht werden, da auch hier die Enden der Zugelemente 17, 20 an Befestigungsstellen 18, 21 befestigt sind, die auf der Seite der jeweiligen Abdeckung 10, 11 liegen. Dementsprechend könnte die der Befestigungsstelle 18 nächstliegende Umlenkrolle 19 weiter nach links verlegt werden, und die der Befestigungsstelle 21 nächstliegende Umlenkrolle 22 könnte weiter nach rechts verlegt werden, wodurch eine Verkürzung der Zugelemente 17, 20 erreichbar ist.

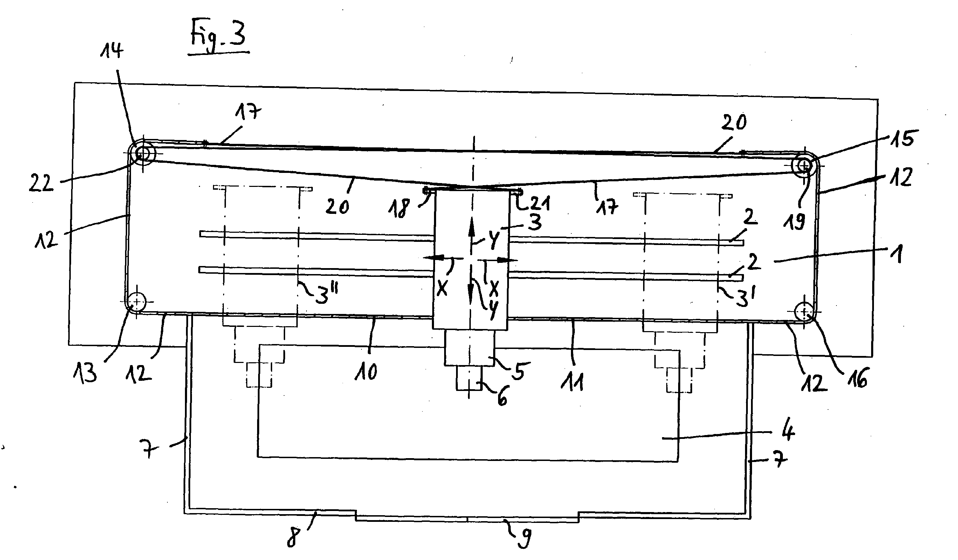

Bei der Ausführungsform nach Fig. 3 sind die den Befestigungsstellen 18, 21 der Zugelemente 17, 20 nächstliegenden Umlenkrollen 19, 22 mit jeweils einer weiteren Umlenkrolle, nämlich der jeweiligen zweiten Umlenkrolle 14, 15, koaxial. Für jede Seite werden dementsprechend nur noch zwei Lagerstellen für jeweils drei Umlenkrollen 13, 14, 22 bzw. 16, 15, 19 benötigt.

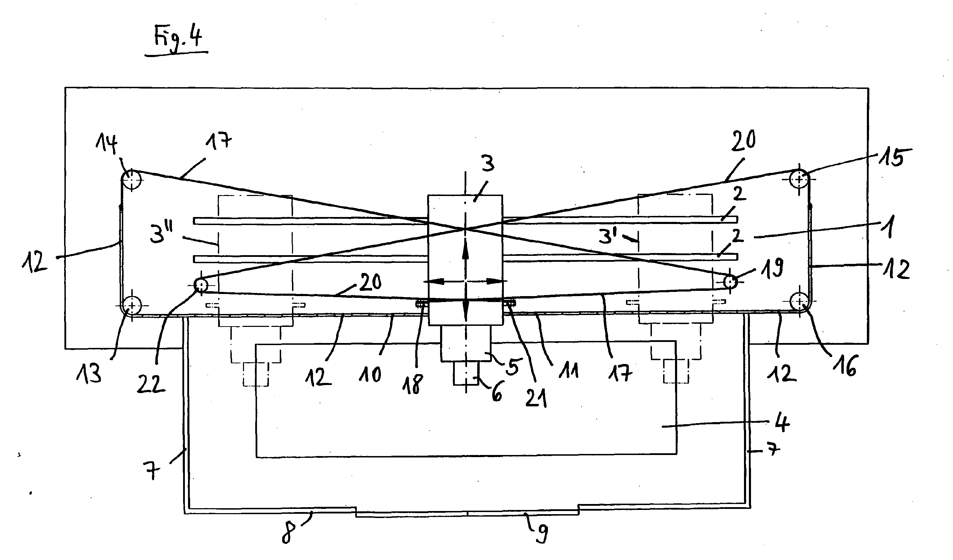

Bei der Ausführungsform nach Fig. 4 sind ebenfalls für jede Seite nur drei Umlenkrollen 13, 14, 19 bzw. 16, 15, 22 vorhanden. Die dem Ständer 3 nächstliegenden Umlenkrollen 19, 20 könnten in einem geringeren Abstand voneinander angeordnet werden, wodurch sich eine weitere Verkürzung der Zugelemente 17, 20 ergibt. Die Befestigungsstellen 18, 21 liegen auf der Seite der jeweiligen Abdeckung 10, 11, und zwar an der Vorderseite des Ständers 3 in der Nähe der Abdeckungen 10, 11, allerdings auf der dem Arbeitsraum 4 abgewandten Seite der Abdeckungen 10, 11.

## Patentansprüche

1. Werkzeugmaschine mit einem Maschinenbett (1) und einem verfahrbaren Ständer (3), an dem beiderseits jeweils eine Abdeckung (10, 11) angebracht ist,
**dadurch gekennzeichnet,**
**daß** an jeder Abdeckung (10,11) jeweils ein Zugelement (17, 20) befestigt ist, dessen anderes Ende jeweils auf der Seite dieser Abdeckung (10, 11 ) mit dem Ständer (3) verbunden (18, 21 ) ist.

2. Werkzeugmaschine mit einem Maschinenbett (1) und einem verfahrbaren Ständer (3), an dem beiderseits jeweils eine Abdeckung (10, 11) angebracht ist,
**dadurch gekennzeichnet,**
**daß** an jeder Abdeckung (10, 11) jeweils ein Zugelement (17, 20) befestigt ist, dessen anderes Ende jeweils mit dem Ständer (3) an dessen der Abdeckung (10, 11) jeweils abgewandten Ende verbunden (18, 21) ist.

3. Werkzeugmaschine nach Anspruch 2, **dadurch gekennzeichnet, daß** die anderen Enden der Zugelemente (17, 20) auf der Seite der jeweiligen Abdeckung (10, 11) mit dem Ständer (3) verbunden (18, 21) sind.

4. Werkzeugmaschine nach einem der vorhergehenden Ansprüche, **dadurch gekennzeichnet, daß** die Abdeckungen (10, 11) an der Vorderseite des Ständers (3) angebracht sind.

5. Werkzeugmaschine nach einem der vorhergehenden Ansprüche, **dadurch gekennzeichnet, daß** die anderen Enden der Zugelemente (17, 20) an der Hinterseite des Ständers (3) angebracht (18, 21) sind.

6. Werkzeugmaschine nach einem der Anspruche 1 bis 4, **dadurch gekennzeichnet, daß** die Zugelemente (17, 20) an der Vorderseite des Ständers (3) angebracht (18, 21) sind.

7. Werkzeugmaschine nach einem der vorhergehenden Ansprüche, **dadurch gekennzeichnet, daß** die den Befestigungsstellen (18, 21) der Zugelemente (17, 20) an dem Ständer (3) nächstliegenden Umlenkrollen (19, 22) hinter dem Ständer (3) angeordnet sind.

8. Werkzeugmaschine nach einem der Ansprüche 1 bis 6, **dadurch gekennzeichnet, daß** die den Befestigungsstellen (18, 21) der Zugelemente (17, 20) an dem Ständer (3) nächstliegenden Umlenkrollen (19, 22) in der Nähe der Abdeckungen (10, 11) angeordnet sind.

9. Werkzeugmaschine nach einem der vorhergehenden Ansprüche, **dadurch gekennzeichnet, daß** die den Befestigungsstellen (18, 21) der Zugelemente (17, 20) an dem Ständer (3) nächstliegenden Umlenkrollen (19, 22) mit jeweils einer weiteren Umlenkrolle (15, 14) für das jeweils andere Zugelement (20, 17) bzw. die jeweils andere Abdeckung (11, 10) koaxial sind.
